# EUROPEAN PATENT SPECIFICATION

(11) **EP 4 551 503 B1**
(45) Date of publication and mention of the grant of the patent: **30.09.2026**
(21) Application number: 23751077.1
(22) Date of filing: 07.07.2023
(51) Int. Cl.: C01B 3/06, C01B 3/103, B01J 19/12

(54) **PLANT AND PROCESS FOR THE PRODUCTION OF HYDROGEN**
ANLAGE UND VERFAHREN ZUR HERSTELLUNG VON WASSERSTOFF
INSTALLATION ET PROCÉDÉ DE PRODUCTION D'HYDROGÈNE

(30) Priority: 07.07.2022 IT 202200014377
(43) Date of publication of application: 14.05.2025
(73) Proprietor: Whydron S.r.l., 20122 Milano (MI) (IT)
(72) Inventor: SCHILLACI, Pietro, 20122 Milano MI (IT)
(74) Representative: Santoro, Sofia
(86) International application number: PCT/IB2023/057029
(87) International publication number: WO 2024/009275

(56) References cited:
- WO-A1-2018/045771
- CN-A- 107 175 056
- CN-A- 112 142 001
- JP-A- S5 983 903
- KING ET AL: "Sunfuels", PROGRESS IN ENERGY AND COMBUSTION SCIENCE, ELSEVIER SCIENCE PUBLISHERS, AMSTERDAM, NL, vol. 8, no. 2, 1 January 1982 (1982-01-01), pages 121 - 134, XP025413714, ISSN: 0360-1285, [retrieved on 19820101], DOI: 10.1016/0360-1285(82)90016-8
- BILGEN ET AL: "Solar hydrogen production by hybrid thermochemical processes", SOLAR ENERGY, ELSEVIER, AMSTERDAM, NL, vol. 41, no. 2, 1 January 1988 (1988-01-01), pages 199 - 206, XP023630337, ISSN: 0038-092X, [retrieved on 19880101], DOI: 10.1016/0038-092X(88)90137-5

## Description

### Field of the invention

The present invention generally relates to a thermo- and pressure-tight photocatalytic plant for the production of hydrogen and/or methanol and to the process thereof.

### State of the art

Various plants and processes for the production of hydrogen, for example by electrolysis or thermolysis, are known in the art but are difficult to implement industrially.

Of the methods known in the state of the art for the production of gaseous hydrogen, the most studied and established is the Sulphur-Iodine cycle (hereinafter also referred to as the S-I cycle), which is more cost-effective than other known methods such as those for electrolysis of water.

The S-I cycle comprises three reactions:
a) I₂₍₁₎+ SO_{2(g)} + 2 H₂O_{(g)} → 2 HI_{(liq)} + H₂SO_{4(liq)} (Bunsen reaction, approx. 120°C)
b) H₂SO₄ → SO₂ + H₂O + ½O₂ (about 830 °C)
c) 2 HI_{(aq)} → I_{2(g)} + H_{2(g)} (Decomposition of iodic acid, approx. 450 °C)

Iodine (I₂) and water (H₂O) or sulphur dioxide (SO₂) are separated by condensation, and hydrogen gas (H₂) remains as the product. The net reaction is therefore as follows: H₂O → H₂ + ½O₂.

However, reactions b) and c) are strongly endothermic and need to be supported by a significant external energy input, which hampers the industrial scalability.

Already suggested in the state of the art is also the possibility of feeding the Sulphur-Iodine cycle with carbon-based compounds (1) or carbon (1bis), according to the following reactions:

(1) -(CH₂)- +3H₂SO₄(l) → 3SO₂(g) + 4H₂O(g) + CO₂(g)

(1bis) C +2H₂SO₄₍₁₎ →2SO_{2(g)} + 2H₂O_{(g)} + CO_{2(g)}

where -CH₂- denotes a generic natural and/or artificial carbon-based organic compound.

Reactions (1) or (1bis) are oxidation reactions of organic compounds to carbon dioxide (CO₂) with concentrated sulphuric acid (H₂SO₄).

If I₂/iodide and/or Br₂/bromide systems are added to the process described above, reaction (1) or (1bis) is accelerated and hydrogen gas (H_{2(g)}) is obtained according to reactions (2) and (3):

(2) SO_{2(g)} + 2H₂O₍ₗ₎ + I₂₍ₗ₎ → H₂SO₄₍ₗ₎ + 2HI₍ₗ₎

(3) 2HI₍ₗ₎ → H_{2(g)} + I₂₍ₗ₎

Since reactions (1)-(3) are part of a cycle in which the H₂SO₄ initially employed is then regenerated in reaction (2), from a purely theoretical point of view, reactions (1)-(3) can be synthesised by means of the overall reaction:

(4) -(CH₂)- +2H₂O_{(g)} → CO_{2(g)} + 3H_{2(g)}

Although the addition of organic compounds and the addition of I₂/iodide and/or Br₂/bromide systems makes the S-I cycle easier, these are very slow reactions that still require a lot of external energy input, e.g. through the use of very high temperatures. To further facilitate the S-I cycle, and to be able to work at lower temperatures, the use of catalytic systems, e.g. iron-based primary catalysts, has also been suggested. However, according to the Applicant's experiments, these catalysts completely inhibit the formation of hydrogen, which was only detected in the absence of iron salts.

Another drawback of the plants/processes for the production of hydrogen known in the state of the art is that the reaction cycle (1)-(3) or (1bis)-(3) stops as soon as the reaction water carried by the initial reagent is exhausted. The processes for the production of H₂ known in the state of the art are thus either processes that occur partially (i.e. do not go to completion) or occur discontinuously, i.e., as mentioned, they are exhausted as the water in the reaction system runs out.

Feeding water into the system suggested by some authors is not a valid solution since, at the process temperatures in question, the water would immediately evaporate, not remaining in the reaction environment and significantly limiting conversions. Thus, to the best of the inventors' knowledge, in state-of-the-art processes, the overall reaction is exhausted when the moisture contained in the treated organic substrate is depleted, and the substrate cannot therefore be completely reacted due to a lack of reaction water, any reintegration being ineffective.

JP S59 83903 A discloses a process for producing hydrogen by thermochemically reacting iodine and water.

It is therefore an object of the present invention to provide a hydrogen production plant improved over those known in the art, in particular one that does not have the aforementioned drawbacks. For example, it is an object of the invention to provide a plant which allows hydrogen to be produced continuously and under easier reaction conditions and is therefore scalable on an industrial scale.

### Summary

To this end, a hydrogen production plant was developed comprising a thermo- and pressure-tight photocatalytic reactor. Surprisingly, the inventors have noticed that in the thermo- and pressure-tight photocatalytic reactor of the invention, all three reactions (1) - (3) or (1bis)-(3), hereinafter also referred to as "reaction cycle (1)-(3)" for the sake of brevity, take place in an almost simultaneous manner, due in part to the presence of a noble metal-based catalytic system which catalyses both the oxidation of organics with sulphuric acid (H₂SO₄) (1) and the formation of hydrogen (H₂) from iodic acid (HI) (3). Thus, an object of the present invention is a hydrogen production plant comprising a thermo- and pressure-tight photocatalytic reactor, the essential features of which are as defined in the appended claim 1. Other ancillary technical features are the subject-matter of the dependent claims.

Another object of the invention is a process for the production of hydrogen comprising the step of adding to a thermo- and pressure-tight photocatalytic reactor organic compounds and/or carbon together with suitable reagents and a noble metal based catalyst, preferably a Pt/Pd/Ir catalyst together with vanadium pentoxide (V₂O₅), at a temperature of 350 to 450°C and a pressure of 10 to 12 barg, the essential features of which are as defined in the appended claim 9 herein.

Although, for the sake of simplicity, the plant/process of the invention is referred to as a plant/process for the production of H₂, the plant/process of the invention is suitable both for the production of hydrogen and/or methanol from organic compounds and for the methanisation of carbonaceous compounds as well as for the disposal of organic waste when used as a carbon-based substrate to feed the process of the invention.

As will be apparent to a person skilled in the art, the present invention has several advantages, to mention a few:
- reactions (1) - (3) or (1bis)-(3) take place quantitatively, almost simultaneously, in the primary thermo- and photocatalytic reactor, due in part to the ambivalence of the catalytic system (e.g. Pt/Pd/Ir + V₂O₅) which successfully catalyses both the oxidation of organic compounds with H₂SO₄ (1) and the formation of H₂ from HI (3);
- the UV irradiation system integrated in the reactor facilitates the reaction by photocatalytic means by increasing the reaction rate and conversion;
- the plant/process of the invention makes it possible to obtain hydrogen from water and, at the same time, to reduce coal, bituminous coal, organic waste or other heavy hydrocarbons to light hydrocarbons (methanol);
- the plant makes it possible to control the water content;
- the choice of working under pressure also means that the reaction environment can work - where necessary - with a higher water content, pushing the overall reaction equilibrium to the right;
- it is possible to work at moderately higher temperatures, increasing conversion and reaction kinetics;
- it is possible to work with a lower volumetric flow rate of the gas streams, which conversely would have required critically large diameter columns, potentially precluding industrial scale-up of the process.

Other aspects, features and advantages of the hydrogen and/or methanol production plant and process of the present invention will be apparent from the following detailed description.

### Brief description of the Figures

By way of example, an embodiment of the system of the invention is presented, with reference to the accompanying drawings, in which:
- Figure 1 is a schematic representation of the hydrogen and/or methanol production plant according to an embodiment of the present invention.
- Figure 2 shows the analytical curve produced by the gas chromatograph. The highlighted peak indicates the presence of hydrogen in the gases produced by the system in EXAMPLE 2.

The thicknesses and dimensions shown in the Figures should be understood as illustrative only, are generally magnified and not necessarily shown in proportion.

### Detailed description of preferred embodiments of the invention

Various embodiments and variations of the system and/or process according to the present invention will be described below, and this also with reference to the Figure introduced above.

In the detailed description that follows, additional embodiments and variants to the embodiments and variants already dealt with in the same description will be illustrated only insofar as they differ from what has already been set out. Furthermore, the various embodiments and variants described below are all capable of being used in combination where compatible.

In its simplest embodiment, the invention relates to a system for the production of hydrogen and/or methanol comprising a thermo- and pressure-tight photocatalytic reactor, and a photocatalytic system, preferably comprising one or more UV lamps integrated in said reactor.

More particularly, the invention relates to a system for producing hydrogen and/or methanol with: a thermo- and photocatalytic primary reactor (R-01), suitable for containing a reaction mixture, comprising
- a pressure-tight main body, equipped with
   at least one water dosing and feed system (DP-01), at least one liquid organic substrate dosing and feed system (DP-02) and/or at least one pressure-tight solid organic substrate dosing and feed system (DP-03), and
- a heating system (E-01), associated to the reactor body, and
- a photocatalytic system inside the reactor (R-01) so as to irradiate the surface of any reaction mixture contained in the reactor.

The primary reactor is generally a cylindrical reactor equipped for the dosing of reagents (e.g. organic substrates and recirculation of a mixture of water, sulphuric acid and iodine) and equipped with a UV irradiation system, i.e. a photocatalysis apparatus, integrated into the primary reactor and insisting on the free surface of the liquid phase or reaction mixture.

In principle, the plant as described can operate continuously (with purge management) or more simply in continuous-discontinuous mode, processing batches of organic or carbonaceous substrate.

The main body of the primary reactor may be constructed of any material suitable to withstand the process conditions of the reaction cycle (1)-(3) described above, e.g. silicon carbide, quartz or other corrosion and high temperature resistant ceramic.

The dosing systems may be as generally known in the state of the art, e.g. a piping system, preferably with watertight valves to regulate the input and/or volumetric dosing pumps. The solids dosing and feeding system can be equipped with a chilled environment and/or a mixer/homogeniser (SM-01 and DP-03) in which to create an aqueous suspension (or *slurry*) to facilitate the feeding of the solid substrates into the reactor, e.g. via valves or dosing pumps.

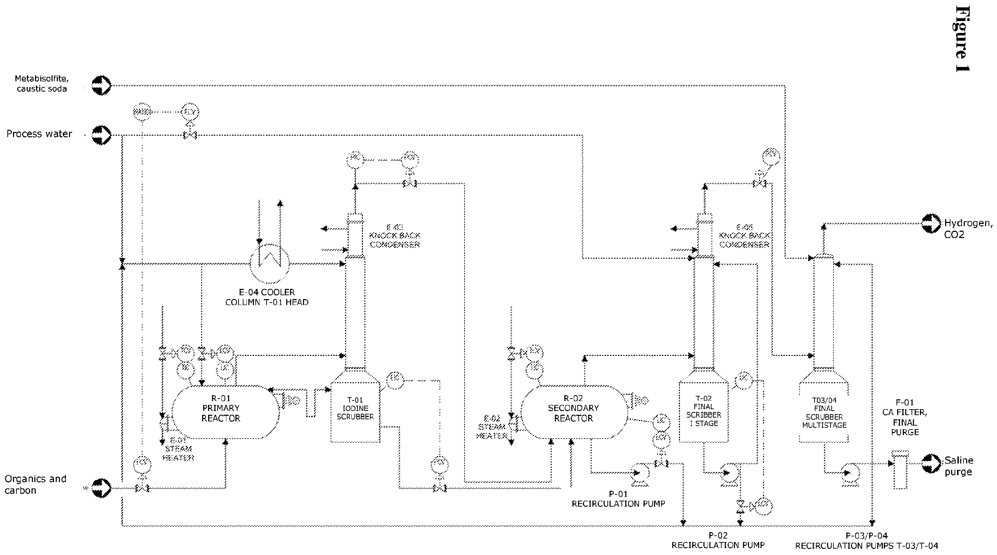

The heating system (E-01) can be a generic heating system (*Steam Heater* in Figure 1) suitable for heating the reaction mixture possibly contained in the main body of the primary reactor (R-01). By way of example, the heating system may be a heat exchanger - preferably of the bayonet or spiral type - associated with or connected to or integrated with the main body of the primary reactor (R-01) according to any of the methods known in the art.

The photocatalytic system (UV in Figure 1) preferably comprises or consists of one or more UV lamps of variable frequency/intensity integrated within the reactor so as to irradiate the reaction mixture possibly contained in the main body of the primary reactor (R-01).

The plant can also be equipped with a visual indicator light, e.g. with a quartz septum, to monitor - through the colour changes characteristic of the various reactions - the status of the process.

The plant can also include an agitation system, preferably a magnetic drag agitation system.

Surprisingly, the inventors noted that, in the primary reactor (R-01) of the plant according to any of the forms of realisation described here, reactions (1), (2) and (3) take place simultaneously, albeit with preponderance of reaction (1). In this first stage, the formation of SO₂, HI and H₂ therefore occurs.

According to any of the embodiments described here, the plant comprises a primary scrubber (T-01) with iodine or iodised water (*iodine scrubber* in Figure 1) for the abatement of the sulphur dioxide (SO₂) produced in the primary reactor. In this scrubber tower, which always operates at pressure (e.g. 10-12 barg) with a decreasing temperature profile (e.g. from the 450°C of the gases leaving the reactor to approx. 120-150°C at the head of the tower, at the inlet to the E-03 heat exchanger), only the further conversion of sulphur dioxide unreacted in the primary reactor (R-01) into iodine and sulphuric acid according to reaction (2) takes place.

The primary scrubber (T-01) may be an iodine scrubber (or *scrubber*) as generally known in the art. The primary scrubber (T-01) comprises a column bottom in fluid communication with the primary reactor (R-01), e.g. connected to the primary reactor (R-01) via an overflow pipe, a column body, a weir head distributor and a condenser (E-03) head, preferably a knock-back condenser, associated with or integrated into the column body (*Knock Back Condenser* in Figure 1).

The column bottom is responsible for collecting the solution containing sulphuric and hydroiodic acid already present in the primary reactor and, for this purpose, is connected to the primary reactor (R-01), for example by means of an overflow. The column bottom can be made of glass or Sic or other ceramic material, or even steel with a ceramic or enamel coating.

The column body is preferably made of material suitable for the temperature profile of reactions (1)-(3), e.g. enamelled steel, Teflon-coated steel or graphite. The column body may further comprise a loose fill bed or fill bodies e.g. chosen from pall rings, raschig rings and/or Berl saddles, preferably made of ceramic or glass material.

As will become evident later in this detailed description, the upper weir head distributor is also useful for feeding the recirculated iodine solution from the secondary reactor (R-02) and the acidic water received from the bottom column of the secondary scrubber (T-02), when present.

As mentioned above, the primary wash tower (T-01) further comprises a condenser, preferably of the knock-back type (E-03), integrated in or associated with the column of said tower. The condenser may be as generally known in the art, e.g. with a graphite, glass or silicon carbide refrigerant body and shell and tube or block geometry. As an example, the condenser shell (E-03) can be directly flanged to the column body of the primary flushing tower (T-01) such that the parts in contact with the process fluid are constantly cooled. The gases partially condense and the condensate drips by gravity back into the column, while the non-condensed gases exit the upper condenser nozzle, dried by cooling. The gases then pass to the next process stage (R-02/T-02), where applicable, preferably through a pressure regulating valve which maintains the pressure in the system at the optimum value to ensure suitable temperatures and water content.

The primary scrubber (T-01) may also be connected, preferably by means of piping made of a suitable material (e.g. Teflon-coated steel), to a cooler (E-04) whose purpose is to cool the fluid entering the primary scrubber (T-01), in particular the fluid entering the column head distributor. By "cooler" in the context of the present invention, is meant any system known to the person skilled in the art to be capable of cooling a fluid, for example, a heat exchanger.

Obviously, the primary reactor (R-01) and/or the primary scrubber (T-01) may comprise one or more means for controlling process parameters e.g. chosen from: means for temperature control (TIC/TCV), means for pressure control (PIC/PCV), means for level control (LIC/LCV) or combinations thereof, preferably wherein said control means are sensors/transmitters (TIC, PIC, LIC) or valves (TCV, PCV, LCV). It is also possible to use meters/analysers to continuously measure or monitor the reaction conversion, e.g. by the installation of colorimeters, densitometers or refractometers, known to a technician in the field.

Although, as mentioned, the conversion process referred to in the present invention can take place entirely in the primary reactor (R-01), with modest conversions, in order to further promote the process yield and, more particularly, for the completion of the reaction (3), the plant can also comprise a secondary reactor (R-02).

The secondary reactor (R-02) is constructively similar to the primary reactor (R-01), and will therefore be illustrated limited to, or with particular reference to, the differences with respect to what has already been disclosed.

The plant according to any of the embodiments described so far may comprise a secondary reactor (R-02) which is thermo- and photocatalytic, wherein said secondary reactor (R-02) comprises
- a pressure-tight main body equipped with
   at least one water dosing and feeding system (DP-04)
   at least one dosing and feeding system for a sulphuric acid and hydroiodic acid solution exiting the column bottom of the primary washing tower (T-01)
   at least one gas whirl system (or gas distributor) at the outlet of the primary scrubber (T-01) (not shown in Figure 1);
- a heating system (E-02) integrated into or associated with the reactor body; and
- a photo-catalytic system (L-02) integrated into or associated with the reactor body (R-02) so as to irradiate the surface of any reaction mixture contained in the main body (e.g. a solution of sulphuric acid and hydrogen iodide).

The heating system (E-02), or *Steam Heater* in Figure 1, and the photo-catalytic system (L-02 or UV) of the secondary reactor (R-02) may be as generally known to a technician in the field, e.g. as described above for the primary reactor.

The secondary reactor (R-02) may also include a recirculation pump (P-01) suitable for returning the iodine-rich solution produced in the secondary reactor (R-02) to the primary reactor (R-01).

The secondary reactor (R-02) may also comprise a secondary scrubber (T-02) which receives the gases exiting from said reactor (R-02). In the secondary scrubber (T-02), which is completely analogous - at least from a constructional point of view - to the primary scrubber, there is no reaction in quantitative terms, but rather a scrubbing and recovery of all the substances entrained by the main gas stream, in order to prevent or contain the escape from the system of all those substances which - according to reactions (1), (2) and (3) - must participate in the reaction set without stoichiometric consumption, i.e. SO₂, SO₃,sulphuric acid, iodine, hydrofluoric acid. Similar to the primary scrubber (T-01), the secondary scrubber thus comprises a column bottom, a column body, a condenser (E-05) associated with said column body, and a weir head distributor. The secondary scrubber (also *final scrubber stage I* in Figure 1) operates at a pressure of approximately 8-10 barg with a decreasing temperature profile.

As seen for the primary scrubber (T-01), the condenser (E-05) can be a knock-back condenser directly connected/flanged to the scrubber column body (T-02). The overhead weir distributor, in the case of the secondary scrubber, is used for the supply of process water, e.g. from a dedicated pipe.

The plant may also include a recirculation pump (P-02) in fluid communication with the primary (T-01) and secondary (T-02) scrubber, which fulfils the dual purpose of
i. ensuring continuous recirculation of the aqueous phase along the secondary washing tower (T-02) which receives process water.
ii. Feeding the washing tower (T-01) with the excess liquid received (and in the initial phase with iodised water).

The plant according to any of the embodiments of the present invention may also comprise a final scrubber section (T-03/04) for washing the produced gases (CO₂ and H₂) which will then possibly be sent for fractionation and/or reforming for the production of methanol and/or fuel cell. Adequate purity of the gases is ensured by the addition in the final scrubber section of the most suitable substances for the removal of entrained impurities, according to optimal industrial practices known to the person skilled in the art. The final scrubber section can, if necessary, be divided into several washing towers or abatement towers suitably sequenced, so as to optimise the effectiveness of the specific additives used and thus recover as much as possible of the reagents involved in the reaction set/cycle. Although the choice of the most effective abatement techniques among the industrially known ones could lead to different set-ups for this scrubber section, which can be adjusted as required from time to time, an effective abatement sequence could be achieved with a final scrubber section, which is meant to be illustrative and in no way limiting, articulated as follows:
i. Metabisulphite or hydrazine abatement tower for iodine destruction.
ii. Soda ash abatement tower for abatement of hydroiodic acid and sulphur dioxide.
iii. Activated carbon section to eliminate the entrainment of organics in the outlet gas or from the purges of the abatement section (in the latter case also F-01).

Therefore, the plant according to any of the embodiments of the present invention may also comprise one or more abatement towers (T-03/04) for scrubbing the outgoing gas from the secondary scrubbing tower (T-02) and/or primary scrubbing tower (T-01), preferably wherein said one or more abatement towers are chosen from: metabisulphite or hydrazine abatement tower, soda ash abatement tower and/or activated carbon section.

The final washing and abatement section of the outlet gases (T-03/04) allows both to utilise the gases - with the necessary purity - for catalytic reforming applications for the production of methanol or selective utilisation of H₂ in fuel cells, and to recover the hydroiodic acid and iodine entrainments from the first abatement stage, returning them to the reaction environment.

As mentioned above, a process for producing hydrogen and/or methanol is also an object of the present invention.

The process can take place by means of the plant according to any of the embodiments described herein, including its simplest embodiment comprising a primary reactor only (R-01). In addition to photocatalysis, the use of noble metal-based catalysts proved particularly advantageous, while the use of iron salts proved to be an obstacle to the success of the process.

The astonishing insight that reactions (1) and (3) occur together, albeit with much lower conversions for reaction (3), in a single thermo-photocatalytic environment - the primary reactor (R-01) in fact - enabled the development of the process for the production of hydrogen and/or methanol of the invention. As will become apparent below, according to a preferred embodiment of the invention, the same reactive and catalytic environment has thus been used in two related stages (the first stage (R-01/T-01) + the second stage (R-02/T-02)), each with a preponderant specific reactive function, but for which recirculations and exchanges of matter can be defined without affecting the catalytic set. Therefore, the invention also relates to a process for producing hydrogen and/or methanol comprising the following steps:
- introducing into a thermo- and pressure-tight photocatalytic reactor equipped with a photocatalytic system, preferably a UV irradiation system, a reaction mixture comprising sulphuric acid, iodine, water and a noble metal catalyst;
- heating the reaction mixture at a temperature of 350 to 450°C to a pressure of about 10 to 12 barg;
- introducing an organic substrate and/or charcoal; and
- irradiating the reaction mixture using the photocatalytic system so that the following reaction cycle takes place:

   -(CH₂)- +3H₂SO₄₍ₗ₎ → 3SO_{2(g)} + 4H₂O_{(g)} + CO_{2(g)} (1)

   oppure

   C +2H₂SO₄₍ₗ₎ →2SO_{2(g)} + 2H2O_{(g)} + CO_{2(g)} (1 bis)

   SO_{2(g)} + 2H₂O₍ₗ₎ + 12(l) → H₂SO₄₍ₗ₎ + 2HI(l) (2)

   2HI(l) → H_{2(g)} + I₂₍ₗ₎ (3).

The reactor may be according to any one of the embodiments of the present invention, for example, it may be like the primary reactor (R-01) described above, equipped precisely with a photocatalytic system wherein said photocatalytic system preferably comprises (or consists of) one or more UV lamps of variable frequency/intensity integrated within the reactor so as to irradiate the reaction mixture possibly contained in the main reactor body.

The noble metal-based catalyst may for example be chosen from a (Pd, Pt, Ru, Rh) and/or (Pt/Pd/Ir) catalyst possibly together with vanadium pentoxide (V₂O₅), preferably the catalyst is a Pt/Pd/Ir catalyst with V₂O₅. As anticipated, the process catalytic system of the present invention preferably does not comprise iron-based catalysts.

By way of example, sulphuric acid, iodine and catalyst may be added in a 100:2:2 weight ratio. However, the weight ratio between the components of the reaction mixture may be varied, depending on the organic substrate processed or the mode of operation - Continuous, Discontinuous (or Batch) or Continuous/Discontinuous.

The organic substrate may be any natural and/or artificial compound or mixture of compounds containing hydrogen and carbon (i.e., organic compound or mixture of organic compounds indeed) or a methylene group (-CH₂-) or carbon. Examples of organic substrates suitable for the purpose of the present invention are, just to mention a few, glycerol, PET, organic waste, biomass, fuel oil, lignite, anthracite, coke, heavy refinery fractions, industrial organic waste, etc., or mixtures thereof. More generally, the organic substrate may be a substrate or organic compound comprising at least one methylene group (-CH₂-) and/or carbon (C).

In any case, it will be apparent to a person skilled in the art, that any organic substrate in general and/or charcoal is suitable for the purpose of the present invention as the starting material does not influence the success of the process in terms of hydrogen production.

However, it is preferable to modulate the weight ratio between the organic substrate and the reagents according to the physical state of the substrate (solid, liquid or biphasic), its possible grain size, the content of impurities that may pollute the catalytic set, the ratio of Carbon and Hydrogen atoms contained therein, its moisture content.

As already explained, the entire cycle of reactions (1), (2) and (3) occurs in the primary reactor, with hydrogen production but with reaction (1) predominating.

The gas produced in the reactor can then be processed in an iodine or iodised water scrubber (or scrubber) tower where the reaction (2) occurs in relevant terms, significantly increasing the conversion of SO₂.

According to any of the embodiments described herein, the process of the invention comprises the further step of washing the gases (CO₂ and H₂) produced in the reactor in an iodine water scrubber tower (T-01) wherein the reaction (2) may advantageously continue.

In those embodiments where this is provided for, an iodine-rich solution, recovered from the secondary reactor (R-02), is fed to the head of the primary scrubber (T-01), which receives liquid phase water falling from the condenser (E-03) and the sulphur dioxide (SO₂) produced in the primary reactor (R-01) according to reaction (1) or (1a), but not completely reacted. In this environment, the iodine oxidises the SO₂ according to reaction (2), thus resulting in a solution rich in sulphuric acid and iodric acid. The residence time can be modulated to give substantially full conversions. The high working pressure favours SO₂ conversion. The exhaust gases, saturated with water, are composed at this stage of CO₂, H₂, HI and H₂O entrainment, with traces of residual SO₂.

The process comprises the further step of treating the spent gases in the scrubber (T-01) with a condenser associated with or integrated into the column of said scrubber and collecting the condensate falling back into the column. In addition to being useful for drying the spent gases, this stage of treatment by means of a condenser, preferably a knock-back condenser, allows the presence of water in the liquid phase necessary for the reaction to take place to be maintained in the bottom of the washing tower (2).

The gases are then laminated by a pressure regulating valve to maintain the optimum pressure (10-12 barg) in the reactor (R-01) and in the iodine water scrubber (T-01). Thus, the process of the present invention comprises the further step of laminating the gases - i.e. regulating the gas pressure - at the outlet of the condenser (E-03) by passing through a pressure regulating valve.

From here, the gas can also be bubbled into a secondary reactor (R-02), which is geometrically similar to the first, thermo- and pressure-tight photocatalytic reactor, where, due to the presence of catalysts and UV-irradiators, the reaction (3) takes place predominantly. The secondary reactor operates at slightly lower pressures than the primary reactor (approx. 8-10 barg) and still high temperatures (> 350°C).

Therefore, the process of the present invention may include the additional step of bubbling said gases (CO₂, H2, HI and H₂O, with traces of residual SO₂) in a second thermo- and pressure-tight photocatalytic reactor (R-02) in the presence of a noble metal-based catalyst, e.g. example, a noble metal-based catalyst as described above, at a temperature >350°C and at a pressure of 8-10 barg such that the reaction (3) is favored.

As anticipated, in the process according to the invention, iodine formed in the secondary reactor (R-02) in solution with water and sulfuric acid can be recirculated to the primary reactor (R-01) to be reused, possibly after cooling in a cooler (E-04) connected or associated with the primary wash tower head (T-01).

Notably the use of ambivalent catalysts, effective for both reactions carried out in the primary reactor and in the secondary reactor, allows recirculation of the iodine solution without risk of wasting catalyst or polluting and rendering the two catalytic environments ineffective.

The gases are still compressed and then, with a lower volumetric flow rate than at atmospheric conditions, they are washed of entrainments and residual impurities in one or more final abatement towers (or scrubbers), for example as described above. As an example, the final scrubber may be a two-stage final scrubber, the first using water involving the recovery of an acid purge containing H₂SO₄ and HI, the second alkaline. The final abatement tower section may include, for example, an abatement tower with metabisulfite or hydrazine, soda ash abatement tower, and/or an activated carbon section. After final scrubbing, the output gases are CO₂ and H₂, which can, for example, be piped to a reformer for methanol production or to a fractionation unit for the production hydrogen or to a fuel cell, which realizes the selective utilization of hydrogen for the energy production.

### EXAMPLES

The operational sequence that realizes the reaction cycle is described here relative to the continuous-discontinuous mode, that is, the treatment of batch that is loaded and processed continuously for the time required to achieve the desired conversion and with reference to the embodiment of the system of the invention involving two stages (R-01/T-01 + R-02/T-01), that is, including both primary and secondary reactors. Nevertheless, as described above, the system of the present invention is also suitable for operation in its simplest form of construction comprising the primary reactor (R-01), combined with the primary washing column (T-01).

### EXAMPLE 1.

a. Loading
   - The two reactors are loaded with sulfuric acid (96-98% titer), iodine and catalytic system based on noble metals (Pd, Pt, Ru, Rh) completely identical to that produced for common catalytic converters, with the possible addition of Vanadium pentoxide. For every 100 parts by weight of sulfuric acid, about 2 parts by weight of iodine and 2 parts by weight of catalyst are added.
   - The column bottom of the scrubbing tower (T-02) is loaded with process water.
   - The column bottoms of the abatement towers (T-03) and (T-04) are loaded with water appropriately dosed with chemical abatement agents (e.g., methylbisophite for (T-03) and caustic soda for (T-04)).
b. By activation of the heating systems (i.e., the two heat exchangers (E-01) and (E-02), heated by steam or other heat carrier) the two reactive environments are brought to the operating temperature. Due to the heating effect, the pressure in the primary reactor (R-01) and in the secondary reactor (R-02) will rise to values of about 10-12 barg and 8-10 barg, respectively.
c. Turning on the abatement system, that is, the recirculation pumps (P-03) and (P-04) and of the chemical abatement agent dosing systems (e.g., methylbisophite for T-03 and caustic soda for T-04).
d. In strict sequence, the following operations are then performed:
   - Turning on the magnetic drive agitation system on the two reactors.
   - Injection of iodized water at the head of the primary (T-01) and secondary (T-02) washing tower (iodine concentration approximately 5 g/L)
   - Activation of the recirculation pump (P-02) for recirculation around the tower (T-02).
   - Progressive feeding of organic substrate (e.g., glycerol feeding). The substrate flow rate will have to be set according to several parameters related to the substrate itself and the kinetics of the various stages of reactions (1) - (3) related to the specific substrate. In the case of glycerol, it is possible to process an amount of substrate equal to at least ten times the volume of the reactor in one hour.

The flow rate and the amount of organic substrate fed into the batch depend on the physical state of the substrate itself and its content of ash and other impurities. Advantageously, the use of substrates free of substances that could potentially pollute the catalytic set, alter the chemistry of the system by introducing species that activate parasitic or competing reactions, or alter the chemical and physical properties of the reaction batch (density, viscosity or boiling point) in a manner given to render the process ineffective, ensures that the system can be used in continuous. By way of example, but in no way limiting, PET or glycerol - used as organic substrates for laboratory testing - are hydrocarbons free of impurities, for which continuous operation was also found to be possible.
- Turning on the photocatalysis lamps.
- Activation of the pump (P-01) for recirculation from second stage (R-02/T-02) to first stage (R-01/T-01) of the sulfuric acid solution.
- Reaching steady-state condition and turning on all control loops shown preliminarily in the process flow diagram in Figure 1 (Process Flow Diagram or PFD), particularly for the management of levels in the reactors and in the bottom of the columns of the towers of the washing towers (T-01) and (T-02).

### 2. Description of the steady-state process

Under steady-state operating conditions, in the primary reactor (R-01), takes place in predominantly the reaction (1) and - with minor conversions - the complete reactive cycle (reactions (2) e (3)). The gases leaving the primary reactor (R-01), containing mainly SO₂, CO₂ and H₂, Iodine and hydrogen iodide entrainments, are sent to a scrubbing tower in water iodine (T-01) in which there are ideal conditions for the reaction (2) to take place preponderantly, due to the input from the top of an aqueous solution containing iodine and sulfuric acid. Iodine reacts with SO₂ and water according to reaction (2) and forms sulfuric acid, which percolates through the column and accumulates in the bottom, together with the hydriodic acid produced. The gases leaving the scrubber tower (T-01) are partially dried by the condenser (E-03), which is responsible for retaining in the environment of the washing tower (T-01) water and hydriodic acid. The gases exiting the condenser (E-03) essentially consist of SO₂ residual, H₂, CO₂, water and hydrogen iodide. The column bottom solution of the washing tower (T-01) rich in sulfuric acid and hydriodic acid reaches the secondary reactor (R-02), where the gas exiting the primary washing tower (T-01) also bubbles. The catalysed environment of the secondary reactor (R-02), due to temperature, pressure and the presence of the photocatalytic system, allows the conversion of hydrogen iodide to iodine, thus producing additional hydrogen (reaction (3)). The contents of the secondary reactor (R-02) are then enriched in iodine.

The gases leaving the secondary reactor (R-02), now essentially only hydrogen, CO₂, and a few entrainments, are washed inside a secondary scrubber tower (T-02) that receives overhead head clean process water. The drags constitute a weak solution of iodine and hydrogen iodide, which is sent to the first stage, specifically to the head of the primary washing tower (T-01). Acidic water from the secondary tower (T-02) reaches the T-01 column, after being mixed with the iodine-enriched sulfuric acid solution coming out of the secondary reactor (R-02). In this way, at the head of the primary washing tower column (T-01) there is a stream that contains, in addition to a small amount of sulfuric acid, also relevant contents of water and iodine, necessary for reaction (2) intended to take place massively right in the primary washing tower (T-01). In this way the cycle is closed, with no waste of iodine and sulfuric acid that remain in the cycle established by the two stages.

The gases leaving the secondary washing tower (T-02), are partially dried by effect of a second gravity or knock-back type condenser (E-05) and go to a final abatement section (T-03/04), where - depending on the use to be made of it (e.g, reforming with methanol production or selective hydrogen use in fuel cells) they will be processed to achieve the required quality as already known in the state of the art.

### EXAMPLE 2

The operational sequence that realizes the reaction cycle is described here in a reduced mode, as it was operated during the experimental tests carried out to validate the chemical-reaction and the experimental investigations aimed at and identifying the kinetics parameters.

In this experimental version, the plant is reduced to devices R-01, T-01, E-01, E-03, T-03 and T-04 and is carried out in batch mode with limited conversions in order to take advantage of the concomitant occurrence within the R-01 reactor alone of reactions (1), (2) and (3).

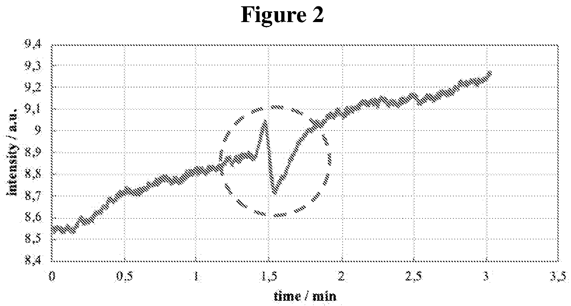

In this configuration, the reactants are all placed in the primary reactor (specifically also Iodine) and the T-02 tower is used only for coarse abatement of the entrainments exiting the reactor that are in this way fed back to the reactor.
a. Loading
   - The reactor is charged with sulfuric acid (96-98% titer), iodine, and catalytic system based on noble metals (Pd, Pt, Ru, Rh) completely identical to that produced for common catalytic converters, with the possible addition of Vanadium pentoxide. For every 100 parts by weight of sulfuric acid, about 2 parts by weight of iodine and 2 parts by weight of catalyst are added.
   - The column bottom of the washing tower (T-02) is charged with process water.
   - The bottom of the columns of the (T-03) and (T-04) abatement towers are loaded with water appropriately dosed with chemical abatement agents (e.g., methylbisophite for (T-03) and caustic soda for (T-04).
b. By activation of the heating system (i.e., heat exchanger (E-01)), the reaction environment is brought to the operating temperature and pressure.
c. Turning on the abatement system, i.e., the recirculation pumps (P-03) and (P-04) and of the chemical abatement agent dosing systems (e.g., methylbisophite for T-03 and caustic soda for T-04).
d. In strict sequence, the following operations are then performed:
   - Turning on the magnetic drive agitation system on the reactor.
   - Water injection at the head of the primary wash tower (T-01). Note that in this configuration the iodine is not fed into the T-01 column, but directly into the R-01 reactor where the complete set of reactions (1), (2) and (3) take place.
   - Progressive feeding the organic reagent (e.g., glycerol inputs) and of water in equal amounts. The substrate flow rate will have to be set according to several parameters related to the substrate itself and the kinetics of the various stages of reactions (1) - (3) related to the specific substrate. In the case of glycerol, an amount of reagent was fed at approx. 10 g per 1000 g of total mass in the R-01 reactor.
   - Simultaneous switching on of the photocatalysis lamps.
   - The organic reagent fed in (e.g., glycerol) is completely consumed and, as a result of the complete set of reactions (1), (2) and (3), the gas, exiting from R-01 and the T-01 tower, after being broken down and washed of impurities and entrainments, was conveyed to an analyzer (gas chromatograph), which confirmed the presence of Hydrogen in gaseous form, evidence of the completion of the reactive cycle, as evidenced by the graph produced by the Gas Chromatograph shown in Figure 2.

The gas chromatograph used for the tests is an HP 6890 GC System, the tests were carried out according to the analytical protocol briefly described below: the gas developed during the reaction after passing through two washing towers is conveyed to a sampling flask sampling, from which it is taken through a gastight microsyringe and injected to the gas chromatograph. The instrument shows as a result of the analysis a series of peaks attributable to different gases and whose areas give quantitative information on the concentration of the gases themselves making use of calibration curves specially acquired before testing.

The same tests repeated with other catalysts, such as F2++/Fe+++, did not produced the same result (hydrogen absent in the gases exiting R-01).

The present invention has been described herein with reference to its preferred embodiments. It is to be understood that other embodiments may exist or be contemplated that share the same inventive core with the one described herein, all of which fall within the scope of protection of the claims set forth below.

## Claims

1. Hydrogen production plant with:
a thermo- and photocatalytic primary reactor (R-01), suitable for containing a reaction mixture, comprising
- a pressure-tight main body, equipped with
at least one water dosing and feeding system, in particular for sulfuric acid and iodine, at least one dosing and feeding system for liquid organic substrate, and/or at least one dosing and feeding system for solid organic substrate or charcoal;
- a heating system (E-01), associated with the reactor body, so as to heat the reaction mixture contained therein;
- a photocatalytic system, preferably comprising one or more UV lamps, within the reactor (R-01), so as to irradiate the surface of the reaction mixture; and
a primary washing tower (T-01) with iodine or iodized water for sulphur dioxide (SO₂) abatement, wherein said primary washing tower (T-01) comprises a column bottom connected to the primary reactor (R-01) via an overflow pipe, a column body containing filling bodies, a condenser (E-03) associated with the column body, and a weir head distributor, and wherein the primary washing tower (T-01) is connected to the primary reactor (R-01) also via a feedline so that the gases (CO₂ and H₂) produced in the reactor can be processed in the tower (T-01).

2. Plant according to claim 1, wherein the primary washing tower further comprises a cooler or heat exchanger (E-04) at the head of the primary washing tower (T-01).

3. Plant according to claim 1 -or 2, wherein the primary reactor and/or the primary washing tower comprises means for controlling process parameters selected from: means for controlling temperature, means for controlling pressure, means for controlling level or combinations thereof, preferably wherein said control means are sensors or valves.

4. Plant according to any one of claims 1 - 3, further comprising a thermo- and photocatalytic secondary reactor (R-02), wherein said secondary reactor (R-02) comprises
- a pressure-tight main body provided with
at least one water dosing and feeding system (DP-04)
at least one dosing and feeding system for a sulfuric acid and hydrogen iodide solution exiting the column bottom of the primary washing tower (T-01),
at least one gas whirl system at the exit of the washing tower,
- a heating system (E-02), associated with the reactor body, and
- a photocatalytic system (L-02), preferably comprising one or more UV lamps, inside the reactor (R-02) so as to irradiate the surface of the sulphuric acid and hydrogen iodide solution.

5. Plant according to claim 4, further comprising a recirculation pump for returning to the primary reactor (R-01) an iodine-rich solution produced in the secondary reactor (R-02).

6. Plant according to claim 4 or 5, further comprising a secondary washing tower (T-02) comprising a column bottom, a column body containing filling bodies, preferably chosen from pall rings, raschig rings or Berl saddles, a condenser (E-05), possibly associated with said column body, and a weir head distributor.

7. Plant according to claim 6, comprising a recirculation pump (P-02) in fluid communication with the primary (T-01) and secondary (T-02) washing tower.

8. Plant according to claim 6 or 7, further comprising one or more abatement towers (T-03, T-04) for scrubbing the gases exiting the secondary scrubbing tower (T-02), preferably wherein said one or more abatement towers are chosen from: metabisulphite or hydrazine abatement tower, soda ash abatement tower and/or activated carbon section.

9. Hydrogen production process comprising the following steps:
- feeding into a pressure-tight thermo- and photocatalytic reactor (R-01) equipped with a photocatalytic system, preferably a UV irradiation system, a reaction mixture comprising sulphuric acid, iodine, water and a noble metal catalyst,
- heating the reaction mixture to a temperature of 350 to 450°C and a pressure of 10 to 12 barg,
- adding one or more organic substrates comprising at least one methylene group (-CH₂) and/or carbon (C); and
- irradiating the reaction mixture with the photocatalytic system so that the following reaction cycle take place:
-(CH₂)- +3H₂SO₄(l) → 3SO₂(g) + 4H₂O(g) + CO₂(g) (1)
or
C +2H₂SO₄₍ₗ₎ →2SO_{2(g)} + 2H₂O_{(g)} + CO_{2(g)} (1 bis)
SO_{2(g)} + 2H₂O₍ₗ₎ + I₂₍ₗ₎ → H₂SO₄₍ₗ₎ + 2HI₍ₗ₎ (2)
2HI₍ₗ₎ → H_{2(g)} + I₂₍ₗ₎ (3).
the process further comprising the step of washing the gases (CO₂ and H₂) produced in the reactor in an iodized water washing tower (T-01) in which the reaction (2) continues at a pressure of 10-12 barg and temperature decreasing from 450°C to 120°C, and optionally also the further step of treating the exhausted gases of the washing tower (T-01) with a condenser (E-03) associated with the column of said washing tower and collecting the water in liquid phase at the bottom of the column.

10. Process according to claim 9, further comprising the step of regulating the pressure of the gases exiting the condenser by passing through a pressure regulating valve.

11. Process according to claim 10, which comprises the further step of bubbling said gases in a pressure-tight secondary reactor (R-02) in the presence of a noble metal-based catalyst at a temperature >350°C and a pressure of 8-10 barg such that the reaction (3) continues.

12. Process according to any one of claims 9 - 10 wherein said noble metal-based catalyst is a (Pd, Pt, Ru, Rh) and/or (Pt/Pd/Ir) catalyst possibly together with vanadium pentoxide (V₂O₅), preferably wherein said catalyst is a Pt/Pd/Ir + V₂O₅ catalyst.

13. Process according to claim 11, wherein the iodine formed in the secondary reactor (R-02) in solution with water and sulphuric acid is recirculated to the primary reactor (R-01) for reuse, after cooling in a cooler (E-04) connected to the washing tower head (T-01).

14. Process according to claim 11, further comprising the step of treating the gases exiting a washing tower (T-02) in one or more abatement towers, preferably wherein said one or more abatement towers comprise one or more scrubber columns, in two stages, a first water stage for recovering an acid purge containing H₂SO₄ and HI and a second alkaline stage, the periodic purging of which is for disposal.

15. Process according to claim 14, further comprising the step of conveying the CO₂ and H₂ gases to a reformer for methanol production or to a fractionation unit for hydrogen production or to a fuel cell selectively using hydrogen for energy production.

## Patentansprüche

1. Wasserstoffproduktionsanlage mit:
einem thermo- und photokatalytischen Primärreaktor (R-01), der geeignet ist, ein Reaktionsgemisch zu enthalten, umfassend
- einen druckdichten Grundkörper, ausgestattet mit
mindestens einem Wasserdosier- und Wasserzuführsystem, insbesondere für Schwefelsäure und Jod, mindestens einem Dosier- und Zuführsystem für flüssiges organisches Substrat und/oder mindestens einem Dosier- und Zuführsystem für festes organisches Substrat oder Holzkohle;
- ein Heizsystem (E-01), das dem Reaktorkörper zugeordnet ist, um das darin enthaltene Reaktionsgemisch zu erhitzen;
- ein photokatalytisches System, vorzugsweise umfassend eine oder mehrere UV-Lampen, innerhalb des Reaktors (R-01), um die Oberfläche des Reaktionsgemischs zu bestrahlen; und
einem primären Waschturm (T-01) mit Jod oder jodiertem Wasser zur Abgasreinigung von Schwefeldioxid (SO₂), wobei der primäre Waschturm (T-01) einen Säulensumpf, der über ein Überlaufrohr mit dem primären Reaktor (R-01) verbunden ist, einen Säulenkörper, der Füllkörper enthält, einen dem Säulenkörper zugeordneten Kondensator (E-03) und einen Wehrkopfverteiler umfasst, und wobei der primäre Waschturm (T-01) auch über eine Zuführleitung mit dem primären Reaktor (R-01) verbunden ist, sodass die im Reaktor erzeugten Gase (CO₂ und H₂) in dem Turm (T-01) verarbeitet werden können.

2. Anlage nach Anspruch 1, wobei der primäre Waschturm ferner einen Kühler oder Wärmetauscher (E-04) am Kopf des primären Waschturms (T-01) umfasst.

3. Anlage nach Anspruch 1 oder 2, wobei der primäre Reaktor und/oder der primäre Waschturm Mittel zur Steuerung von Prozessparametern umfasst, ausgewählt aus: Mitteln zur Steuerung der Temperatur, Mitteln zur Steuerung des Drucks, Mitteln zur Steuerung des Füllstands oder Kombinationen davon, vorzugsweise wobei die Steuermittel Sensoren oder Ventile sind.

4. Anlage nach einem der Ansprüche 1 bis 3, ferner umfassend einen thermo- und photokatalytischen Sekundärreaktor (R-02), wobei der Sekundärreaktor (R-02) umfasst:
- einen druckdichten Grundkörper, der versehen ist mit
mindestens einem Wasserdosier- und Wasserzuführsystem (DP-04)
mindestens einem Dosier- und Zuführsystem für eine Schwefelsäure- und Iodwasserstofflösung, die aus dem Säulensumpf des primären Waschturms (T-01) austritt,
mindestens einem Gaswirbelsystem am Austritt des Waschturms,
- ein Heizsystem (E-02), das dem Reaktorkörper zugeordnet ist, und
- ein photokatalytisches System (L-02), das vorzugsweise eine oder mehrere UV-Lampen umfasst, im Inneren des Reaktors (R-02), um die Oberfläche der Lösung aus Schwefelsäure und Iodwasserstoff zu bestrahlen.

5. Anlage nach Anspruch 4, ferner umfassend eine Umwälzpumpe zum Rückführen einer im Sekundärreaktor (R-02) erzeugten iodreichen Lösung in den Primärreaktor (R-01).

6. Anlage nach Anspruch 4 oder 5, ferner umfassend einen sekundären Waschturm (T-02), umfassend einen Säulensumpf, einen Säulenkörper, der Füllkörper enthält, vorzugsweise ausgewählt aus Pall-Ringen, Raschig-Ringen oder Berl-Sätteln, einen Kondensator (E-05), der gegebenenfalls dem Säulenkörper zugeordnet ist, und einen Wehrkopfverteiler.

7. Anlage nach Anspruch 6, umfassend eine Umwälzpumpe (P-02) in Fluidverbindung mit dem primären (T-01) und sekundären (T-02) Waschturm.

8. Anlage nach Anspruch 6 oder 7, ferner umfassend einen oder mehrere Abgasreinigungstürme (T-03, T-04) zum Waschen der Gase, die aus dem sekundären Waschturm (T-02) austreten, vorzugsweise wobei der eine oder die mehreren Abgasreinigungstürme ausgewählt sind aus: Metabisulfit- oder Hydrazin-Abgasreinigungsturm, Natriumcarbonat-Abgasreinigungsturm und/oder Aktivkohleabschnitt.

9. Wasserstoffproduktionsprozess, umfassend die folgenden Schritte:
- Zuführen eines Reaktionsgemischs, umfassend Schwefelsäure, Iod, Wasser und einen Edelmetallkatalysator, in einen druckdichten thermo- und photokatalytischen Reaktor (R-01), der mit einem photokatalytischen System, vorzugsweise einem UV-Bestrahlungssystem, ausgestattet ist,
- Erhitzen des Reaktionsgemischs auf eine Temperatur von 350 bis 450 °C und einen Druck von 10 bis 12 barg,
- Zugeben eines oder mehrerer organischer Substrate, umfassend mindestens eine Methylengruppe (-CH₂) und/oder Kohlenstoff (C); und
- Bestrahlen des Reaktionsgemischs mit dem photokatalytischen System, so dass der folgende Reaktionszyklus stattfindet:
-(CH₂)- +3H₂SO₄₍₁₎ → 3SO_{2(g)} + 4H₂O_{(g)} + CO_{2(g)} (1)
oder
C +2H₂SO₄₍₁₎ → 2SO_{2(g)} + 2H₂O_{(g)} + CO_{2(g)} (1 bis)
SO_{2(g)} + 2H₂O₍₁₎ + I₂₍₁₎ → H₂SO₄₍₁₎ + 2HI₍₁₎ (2)
2HI₍₁₎ → H_{2(g)} + I₂₍₁₎ (3),
wobei der Prozess ferner den Schritt des Waschens der im Reaktor erzeugten Gase (CO₂ und H₂) in einem Waschturm für iodiertes Wasser (T-01) umfasst, in dem die Reaktion (2) bei einem Druck von 10 bis 12 barg und einer von 450 °C auf 120 °C abnehmenden Temperatur fortgesetzt wird, und gegebenenfalls auch den weiteren Schritt des Behandelns der Abgase des Waschturms (T-01) mit einem Kondensator (E-03), der der Säule des Waschturms zugeordnet ist, und des Sammelns des Wassers in flüssiger Phase am Boden der Säule.

10. Verfahren nach Anspruch 9, ferner umfassend den Schritt des Regelns des Drucks der aus dem Kondensator austretenden Gase durch Hindurchleiten durch ein Druckregelventil.

11. Verfahren nach Anspruch 10, umfassend den weiteren Schritt des Einperlens der Gase in einem druckdichten Sekundärreaktor (R-02) in Gegenwart eines edelmetallbasierten Katalysators bei einer Temperatur >350 °C und einem Druck von 8 bis 10 barg, sodass die Reaktion (3) fortgesetzt wird.

12. Verfahren nach einem der Ansprüche 9 bis 10, wobei der edelmetallbasierte Katalysator ein (Pd, Pt, Ru, Rh)- und/oder (Pt/Pd/Ir)-Katalysator ist, gegebenenfalls zusammen mit Vanadiumpentoxid (V₂O₅), vorzugsweise wobei der Katalysator ein Pt/Pd/Ir + V₂O₅-Katalysator ist.

13. Verfahren nach Anspruch 11, wobei das im Sekundärreaktor (R-02) gebildete Iod in Lösung mit Wasser und Schwefelsäure nach Abkühlung in einem mit dem Waschturmkopf (T-01) verbundenen Kühler (E-04) zur Wiederverwendung in den Primärreaktor (R-01) zurückgeführt wird.

14. Verfahren nach Anspruch 11, ferner umfassend den Schritt des Behandelns der aus einem Abgasreinigungsturm (T-02) austretenden Gase in einem oder mehreren Abgasreinigungstürmen, vorzugsweise wobei der eine oder die mehreren Abgasreinigungstürme eine oder mehrere Waschsäulen umfassen, in zwei Stufen, einer ersten Wasserstufe zur Rückgewinnung einer Säurespülung, die H₂SO₄ und HI enthält, und einer zweiten alkalischen Stufe, deren periodische Spülung zur Entsorgung bestimmt ist.

15. Verfahren nach Anspruch 14, ferner umfassend den Schritt des Förderns der CO₂- und H₂-Gase zu einem Reformer zur Methanolherstellung oder zu einer Fraktionierungseinheit zur Wasserstoffherstellung oder zu einer Brennstoffzelle, die selektiv Wasserstoff zur Energieerzeugung verwendet.

## Revendications

1. Installation de production d'hydrogène avec :
un réacteur primaire (R-01) thermo- et photo-catalytique, approprié pour contenir un mélange réactionnel, comprenant
- un corps principal étanche à la pression, équipé de
au moins un système de dosage et d'alimentation d'eau, en particulier pour de l'acide sulfurique et de l'iode, au moins un système de dosage et d'alimentation pour un substrat organique liquide, et/ou au moins un système de dosage et d'alimentation pour un substrat organique solide ou du charbon ;
- un système de chauffage (E-01), associé au corps de réacteur, de façon à chauffer le mélange réactionnel contenu dans celui-ci ;
- un système photocatalytique, comprenant de préférence une ou plusieurs lampes UV, au sein du réacteur (R-01), de façon à irradier la surface du mélange réactionnel ; et
une tour de lavage primaire (T-01) avec de l'iode ou de l'eau iodée pour une épuration du dioxyde de soufre (SO₂), dans laquelle ladite tour de lavage primaire (T-01) comprend un fond de colonne raccordé au réacteur primaire (R-01) par l'intermédiaire d'un tuyau de trop-plein, un corps de colonne contenant des corps de remplissage, un condenseur (E-03) associé au corps de colonne, et un distributeur de tête à déversoir, et dans laquelle la tour de lavage primaire (T-01) est raccordée au réacteur primaire (R-01) également par l'intermédiaire d'une ligne d'alimentation de sorte que les gaz (CO₂ et H₂) produits dans le réacteur peuvent être traités dans la tour (T-01).

2. Installation selon la revendication 1, dans laquelle la tour de lavage primaire comprend en outre un refroidisseur ou un échangeur de chaleur (E-04) au niveau de la tête de la tour de lavage primaire (T-01).

3. Installation selon la revendication 1 ou 2, dans laquelle le réacteur primaire et/ou la tour de lavage primaire comprennent des moyens permettant de commander des paramètres de procédé choisis parmi : des moyens permettant de commander la température, des moyens permettant de commander la pression, des moyens permettant de commander le niveau ou des combinaisons de ceux-ci, de préférence dans laquelle lesdits moyens de commande sont des capteurs ou des vannes.

4. Installation selon l'une quelconque des revendications 1-3, comprenant en outre un réacteur secondaire (R-02) thermo- et photo-catalytique, dans laquelle ledit réacteur secondaire (R-02) comprend
- un corps principal étanche à la pression, pourvu de
au moins un système de dosage et d'alimentation d'eau (DP-04)
au moins un système de dosage et d'alimentation pour une solution d'acide sulfurique et d'acide iodhydrique sortant du fond de colonne de la tour de lavage primaire (T-01),
au moins un système de tourbillonnement de gaz à la sortie de la tour de lavage,
- un système de chauffage (E-02), associé au corps de réacteur, et
- un système photocatalytique (L-02), comprenant de préférence une ou plusieurs lampes UV, à l'intérieur du réacteur (R-02) de façon à irradier la surface de la solution d'acide sulfurique et d'acide iodhydrique.

5. Installation selon la revendication 4, comprenant en outre une pompe de recirculation permettant de renvoyer au réacteur primaire (R-01) une solution riche en iode produite dans le réacteur secondaire (R-02).

6. Installation selon la revendication 4 ou 5, comprenant en outre une tour de lavage secondaire (T-02) comprenant un fond de colonne, un corps de colonne contenant des corps de remplissage, de préférence choisis parmi anneaux de Pall, anneaux de Raschig ou selles de Berl, un condenseur (E-05), éventuellement associé audit corps de colonne, et un distributeur de tête à déversoir.

7. Installation selon la revendication 6, comprenant une pompe de recirculation (P-02) en communication fluidique avec les tours de lavage primaire (T-01) et secondaire (T-02).

8. Installation selon la revendication 6 ou 7, comprenant en outre une ou plusieurs tours d'épuration (T-03, T-04) permettant de purifier les gaz sortant de la tour de purification secondaire (T-02), de préférence dans laquelle ladite ou lesdites tours d'épuration sont choisies parmi : une tour d'épuration au métabisulfite ou à l'hydrazine, une tour d'épuration au carbonate de sodium et/ou une section de charbon actif.

9. Procédé de production d'hydrogène comprenant les étapes suivantes :
- l'alimentation dans un réacteur (R-01) thermo- et photo-catalytique étanche à la pression équipé d'un système photocatalytique, de préférence un système d'irradiation UV, d'un mélange réactionnel comprenant de l'acide sulfurique, de l'iode, de l'eau et un catalyseur à métal noble,
- le chauffage du mélange réactionnel à une température de 350 à 450 °C et à une pression de 10 à 12 bar absolus,
- l'ajout d'un ou plusieurs substrats organiques comprenant au moins un groupe méthylène (-CH2) et/ou du carbone (C) ; et
- l'irradiation du mélange réactionnel avec le système photocatalytique de sorte que le cycle réactionnel suivant se produit :
-(CH₂)- +3H₂SO₄₍₁₎ → 3SO_{2(g)} + 4H₂O_{(g)} + CO_{2(g)} (1)
ou
C +2H₂SO₄₍₁₎ → 2SO_{2(g)} + 2H₂O_{(g)} + CO_{2(g)} (1 bis)
SO_{2(g)} + 2H₂O₍₁₎ + I₂₍₁₎ → H₂SO₄₍₁₎ + 2HI₍₁₎ (2)
2HI₍₁₎ → H_{2(g)} + I₂₍₁₎ (3).
le procédé comprenant en outre l'étape de lavage des gaz (CO₂ et H₂) produits dans le réacteur dans une tour de lavage (T-01) à eau iodée dans laquelle la réaction (2) continue à une pression de 10 à 12 bar absolus et à une température diminuant de 450 °C à 120 °C, ainsi que facultativement l'étape supplémentaire de traitement des gaz évacués de la tour de lavage (T-01) avec un condenseur (E-03) associé à la colonne de ladite tour de lavage et de collecte de l'eau en phase liquide au fond de la colonne.

10. Procédé selon la revendication 9, comprenant en outre l'étape de régulation de la pression des gaz sortant du condenseur par passage à travers une vanne de régulation de pression.

11. Procédé selon la revendication 10, qui comprend l'étape supplémentaire de propagation desdits gaz dans un réacteur secondaire (R-02) étanche à la pression en présence d'un catalyseur à base de métal noble à une température >350 °C et à une pression de 8 à 10 bar absolus de telle sorte que la réaction (3) continue.

12. Procédé selon l'une quelconque des revendications 9 à 10 dans lequel ledit catalyseur à base de métal noble est un catalyseur (Pd, Pt, Ru, Rh) et/ou (Pt/Pd/Ir) éventuellement conjointement avec du pentoxyde de vanadium (V₂O₅), de préférence dans lequel ledit catalyseur est un catalyseur Pt/Pd/Ir + V₂O₅.

13. Procédé selon la revendication 11, dans lequel l'iode formé dans le réacteur secondaire (R-02) en solution avec de l'eau et de l'acide sulfurique est remis en circulation vers le réacteur primaire (R-01) pour réutilisation, après refroidissement dans un refroidisseur (E-04) raccordé à la tête de tour de lavage (T-01).

14. Procédé selon la revendication 11, comprenant en outre l'étape de traitement des gaz sortant d'une tour de lavage (T-02) dans une ou plusieurs tours d'épuration, de préférence dans lequel ladite ou lesdites tours d'épuration comprennent une ou plusieurs colonnes de purification, à deux étages, un premier étage d'eau permettant de récupérer une purge d'acide contenant H₂SO₄ et HI et un second étage alcalin, dont la purge périodique est pour élimination.

15. Procédé selon la revendication 14, comprenant en outre l'étape de transport des gaz CO₂ et H₂ vers un reformeur pour production de méthanol ou vers une unité de fractionnement pour production d'hydrogène ou vers une pile à combustible utilisant sélectivement de l'hydrogène pour la production d'énergie.
